# EUROPEAN PATENT APPLICATION

(11) **EP 2 701 052 A2**
(43) Date of publication of application: **26.02.2014**
(21) Application number: 13180245.6
(22) Date of filing: 13.08.2013
(51) Int. Cl.: G06F 3/0488

(54) **Portable device and guide information provision method thereof**

(30) Priority: 23.08.2012 KR 20120092143
(71) Applicant: Samsung Electronics Co., Ltd, Gyeonggi-do 443-742 (KR)
(72) Inventor: Jeong, Hyesoon, 443-742 Gyeonggi-do (KR); Lee, Inho, 443-742 Gyeonggi-do (KR)
(74) Representative: Nederlandsch Octrooibureau

(57) **Abstract**

A portable device and guide information providing method thereof for providing guide information in response to a hovering gesture input made with a pen are provided. The method includes detecting a hovering gesture input, acquiring guide information corresponding to a currently running application, and displaying the guide information in response to the hovering gesture input.

## Description

### BACKGROUND OF THE INVENTION

### 1. Field of the Invention:

The present invention relates to a portable device and guide information providing method thereof. More particularly, the present invention relates to a portable device and guide information providing method thereof for providing guide information in response to a hovering gesture input made with a pen.

### 2. Description of the Related Art:

With the emergence of smartphones, recent portable devices are configured to perform a diverse set of functions. However, from the user's perspective, such a diverse set of functions of the portable device make manipulation of the portable device difficult.

In order to overcome such a problem, the portable device manufacturer provides the user with an embedded help or guide function of the portable device.

However, the current guide function is provided in such a way of presenting the guide repeatedly whenever a certain menu is entered such that a user who is already familiar with the menu has to encounter the unnecessary guide, thereby resulting in inconvenience to the user. In order to mitigate such an inconvenience, certain portable devices are provided with a function which allows the user to toggle the guide presentation between an off and on state. However, in this case, the user is required to reset the guide function to see the guide again, thereby resulting in another inconvenience.

Therefore, a need exists for a portable device and a guide providing method thereof that is capable of presenting the guide in interaction to a hovering gesture input with a pen.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a portable device and a guide providing method thereof that is capable of presenting the guide in interaction to a hovering gesture input with a pen.

In accordance with an aspect of the present invention, a guide providing method of a portable device is provided. The method includes detecting a hovering gesture input, acquiring guide information corresponding to a currently running application, and displaying the guide information in response to the hovering gesture input.

In accordance with another aspect of the present invention, a portable device is provided. The device includes an input unit which detects a hovering gesture input and generates an input signal corresponding to the hovering gesture input, a display unit which displays information, and a control unit which controls acquiring guide information corresponding to a currently running application in response to the hovering gesture input from the input unit and controls the display unit to display the guide information in response to a hovering gesture input.

In accordance with an aspect of the present invention, a guide providing method of a portable device is provided. The method includes detecting a hovering gesture input made with a pen, determining whether the hovering gesture input is maintained over a predetermined time duration, acquiring, when the hovering gesture input is maintained over the predetermined time duration, guide information of a currently running application, and displaying the guide information corresponding to the currently running application at a position at which the hovering gesture input occurs.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a portable device according to an exemplary embodiment of the present invention;

FIG. 2 is a diagram illustrating a configuration of an input unit such as, for example, the input unit of FIG. 1 according to an exemplary embodiment of the present invention;

FIG. 3 is a flowchart illustrating a guide information providing method of a portable device according to an exemplary embodiment of the present invention;

FIG. 4 is a flowchart illustrating a hovering input detection procedure of a guide information providing method according to an exemplary embodiment of the present invention;

FIG. 5 is a diagram illustrating an example of a hovering gesture input in a guide information providing method according to an exemplary embodiment of the present invention;

FIG. 6 is a diagram illustrating an example of guide information presentation in a guide information providing method according to an exemplary embodiment of the present invention;

FIG. 7 is a diagram illustrating an example of guide information presentation in a guide information providing method according to an exemplary embodiment of the present invention;

FIG. 8 is a diagram illustrating an example of guide information presentation in a guide information providing method according to an exemplary embodiment of the present invention;

FIG. 9 is a diagram illustrating an example of presenting guide information corresponding to a drawing application in a guide information providing method according to an exemplary embodiment of the present invention;

FIG. 10 is a diagram illustrating an example of presenting guide information of a quick menu in a guide information providing method according to an exemplary embodiment of the present invention; and

FIG. 11 is a diagram illustrating an example of presenting guide information in accordance with a change of a hovering gesture input position in a guide information providing method according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

Exemplary embodiments of the present invention may be applied for controlling a portable device providing a guide function.

Exemplary embodiments of the present invention may be applied to all types of devices including a smartphone, a portable terminal, a mobile terminal, a Personal Digital Assistant (PDA), a Portable Multimedia Player (PMP), a Global Positioning System (GPS) device, a handheld gaming device, a handheld e-book, a note pad, a Wibro terminal, a tablet PC, and the like that are provided with a guide function.

The terminology used herein is for the purpose of describing particular embodiments only and is not intended to limit exemplary embodiments of the present invention. Unless otherwise defined, all terms used herein have the same meaning as commonly understood by one of ordinary skill in the art to which present invention pertains, and should not be interpreted as having an excessively comprehensive meaning nor as having an excessively contracted meaning. If a technical term used herein is erroneous that fails to accurately express the technical idea of exemplary embodiments of the present invention, such a technical term should be replaced with technical terms that allow the person in the art to properly understand. The general terms used herein should be interpreted according to the definitions in the dictionary or in the context and should not be interpreted as an excessively contracted meaning.

As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, steps, operations, elements, components, and/or groups thereof.

Exemplary embodiments of the present invention are described with reference to the accompanying drawings in detail.

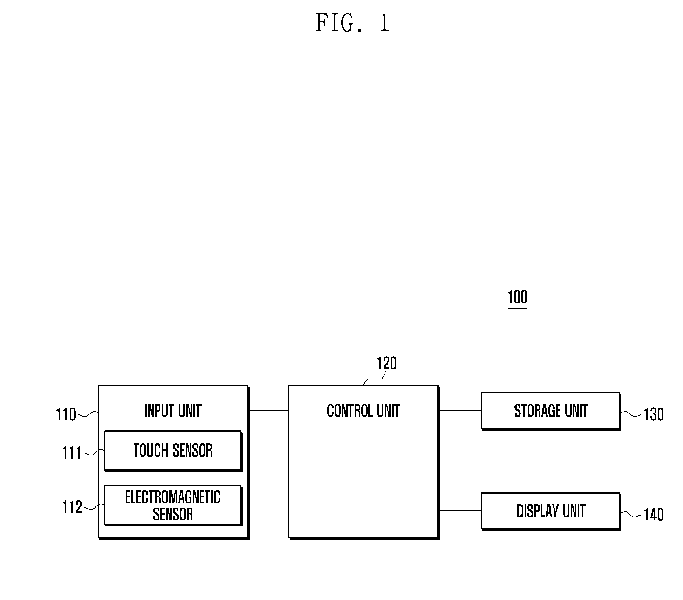

FIG. 1 is a block diagram illustrating a configuration of a portable device according to an exemplary embodiment of the present invention.

Referring to FIG. 1, the portable device 100 includes an input unit 110, a control unit 120, a storage unit 130, and a display unit 140.

The input unit 110 detects a user input and sends an input signal corresponding to the user input to the control unit 120.

The input unit 110 may include a touch sensor 111, an electromagnetic sensor 112, and the like.

The touch sensor 111 may detect the touch gesture of the user. The touch sensor 111 may be formed with any of a touch film, a touch sheet, a touch pad, and/or the like. The touch sensor 111 detects the touch input and generates the corresponding input signal to the control unit 120. At this time, the information corresponding to the input signal may be displayed on the screen of the display unit 140. The touch sensor 111 may generate various manipulation signals in response to the user's touch gesture by a certain input means. The touch sensor 111 is capable of detecting the gesture made with the human body (e.g., a hand) and/or a physical tool (e.g., a stylus pen, a digitizer pen, and the like). The touch sensor 111 may also generate a signal in response to the selection of a button provided on the physical tool (e.g., the pen). The touch sensor 111 may detect the direct touch or proximity gesture made within a predetermined distance.

The electromagnetic sensor 112 may detect the touch or proximity gesture according to the change of the strength of the electromagnetic field. The electromagnetic sensor 112 may include a coil inducing the magnetic field so as to detect the proximity of an object having a resonance circuit triggering change of the magnetic field generated by the electromagnetic sensor 112. The electromagnetic sensor 112 can be any of a stylus pen, digitizer pen, or the like as the object having the resonance circuit. The electromagnetic sensor 112 may detect a proximity gesture or a hovering gesture made above the portable device 100 within a predetermined distance. The input means for making an input to the electromagnetic sensor 112 may include keys, buttons, dials, and the like, and the keys, buttons, and dial may change the magnetic field based on manipulation thereof. Accordingly, the magnetic sensor 112 is configured to detect the manipulation state of the keys, buttons, and dial of the input unit.

The input unit 110 may include an input pad. The input unit 110 also can be implemented in such way that the touch sensor 111 and the electromagnetic sensor 112 are mounted on the input pad. The input unit 110 can be implemented in such a way that the touch sensor 111 is adhered on the surface of the input pad in the form of a film or integrated into the input pad in the form of a panel. The input unit 110 also can be implemented as an input pad of an Electro Magnetic Resonance (EMR) type or an Electro Magnetic Interference (EMI) type using the electromagnetic sensor 112. The input unit 110 can be implemented with one or more layered input pads for detecting an input gesture using plural sensors.

The input unit 110 can be integrated with the display unit 140 in a layered structure so as to work as an input screen. For example, the input unit 110 can be equipped with an input pad having the touch sensor 111 and integrated with the display unit 140 to form a Touch Screen Panel (TSP). Also, the input unit 110 can be equipped with the input pad having the electromagnetic sensor 112 and integrated with the display unit 140.

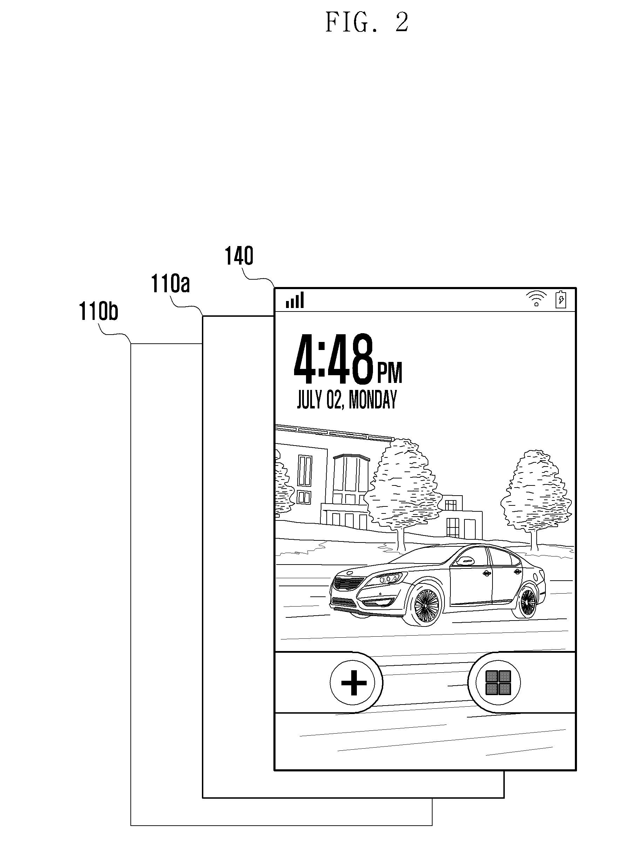

FIG. 2 is a diagram illustrating a configuration of an input unit such as, for example, the input unit of FIG. 1 according to an exemplary embodiment of the present invention.

Referring to FIG. 2, the input unit 110 includes two layered input pads, such as, for example, the first input pad 110a and the second input pad 110b. Each of the first and second pads 110a and 110b can be a touch pad with the touch sensor 111, a pressure pad with a pressure sensor, an electromagnetic pad with the electromagnetic sensor 112, an EMR pad, or the like. The first and second input pads 110a and 110b may correspond to other input means to detect the inputs made by different means. For example, the first input pad 110a can be a touch pad for detecting a touch gesture made with the human body, and the second input pad 110b may be an EMR pad for detecting a gesture made with a pen. The input unit 110 may also detect the multi-point touch gesture with the first and second input pads 110a and 110b. The input pad for detecting the pen gesture may detect the manipulation state of a key, a button, a jog dial, or the like of the pen.

The input unit 100 may be formed in a layered structure with the display unit 140. The first and second input pads 110a and 110b are layered below the display unit 140 to detect the gesture directing an icon, a menu item, or a button presented on the display unit 140. The display unit 140 can be implemented in the form of a normal display panel or a TSP panel integrating an input pad.

Although FIG. 2 is directed to an example of the integrated input unit 110 and display unit 140, the input unit 110 and the display unit 140 can be implemented variously depending on the type and number of input pads of the input unit 110, layering order of the input pad and the display unit 140, and the manufacturing technology of the portable device 100.

According to an exemplary embodiment of the present invention, the input unit 110 may detect a hovering gesture input. The input unit 110 generates an input signal corresponding to the hovering gesture to the control unit 120. The input unit 110 may generate the input signal including hovering gesture input information based on the hovering gesture occurrence position, input means, and manipulation state of a button of the input unit.

The control unit 120 may control the overall components integrally for the operation of the portable terminal 100. For example, if a hovering gesture made with a pen is detected by means of the input unit 110, the control unit 120 controls the display unit 140 to display a guide.

According to an exemplary embodiment of the present invention, the control unit 120 receives the input signal generated by the input unit 110 in response to the hovering gesture input and performs an operation to provide the guide information. In order to receive the input signal generated by the input unit 110 in response to the hovering gesture input and to perform an operation to provide the guide information, the control unit 120 acquires the guide information corresponding to the currently running application. The control unit 120 also controls the display unit 140 to display the guide information in response to the hovering gesture input. At this time, the control unit 120 is capable of executing the guide information providing operation when the hovering gesture input is made with a pen.

According to an exemplary embodiment of the present invention, the control unit 102 determines whether the hovering gesture is maintained over a predetermined time duration. If the control unit 102 determines that the hovering gesture is maintained over the predetermined time duration, the control unit 102 performs the operation for providing the guide information.

The operations of the control unit 120 are described in detail later with reference to accompanying drawings.

The storage unit 130 may store the programs and commands for operating the portable device 100. The control unit 120 may be configured to execute the programs and commands stored in the storage unit 130.

The storage unit 130 may include at least one of a flash memory, a hard disk, a multimedia card micro type memory, a card memory (e.g., SD, XD, etc.), a Random Access Memory (RAM), a Read-Only Memory (ROM), an Electrically Erasable Programmable Read-Only Memory (EEPROM), a Programmable ROM (PROM), a magnetic memory, a magnetic disk, an optical disc, and the like.

According to exemplary embodiments of the present invention, the storage unit 130 may include at least one of application information and guide information corresponding to the application information.

The guide information may include the information on the detailed user interface function used for controlling the application. For example, the guide information may include the information on the interface used in controlling the application functions such as page navigation, list navigation, text input, text selection, and the like. The guide information may also include the information on the interface corresponding to shortcut keys for executing the functions such as, for example, a double tap, a drag, and another specific gesture. If the currently running application is a drawing application, the guide information may include a type, a boldness, and a color of the pen. The guide information may correspond to or otherwise include the quick menu items available for the currently running application.

If necessary, the guide information can be configured to include the information on the interface provided by the portable device 100 regardless of the running application. For example, the guide information may include the information on the interface for switching among the idle screen, lock screen, and home screen of the portable device, the interface for presenting the list of the applications running on the background, and the interface for quick execution of search service.

The display unit 140 displays (outputs) the information processed by the portable device 100. For example, the display unit 140 may display the guide information corresponding to the currently running application, program, or service along with the User Interface (UI) or Graphic User Interface (GUI).

The display unit 140 can be implemented with at least one of a Liquid Crystal Display (LCD), a Thin Film Transistor LCD (TFT LCD), an Organic Light-Emitting Diode (OLED), a flexible display, a 3-Dimentional (3D) display, and the like.

The display unit 140 can be formed in a layered structure with the touch sensor 111 and/or the electromagnetic sensor 112 as the components of the input unit 110 to implement the touchscreen. The touchscreen-enabled display unit 140 may operate as an input device.

According to exemplary embodiments of the present invention, the display unit 140 may display the guide information under the control of the control unit 120. The display unit 140 may display the guide information with at least one of a semitransparent effect, a popup window effect, an animation effect, and a slide effect under the control of the control unit 120. The display unit 140 may display the guide information in at least one of a radiation, a sector, a linear, an oval format, and the like, with at least one of text, an image, an icon, and the like based on the hovering gesture input position at which the hovering gesture input is detected.

Although FIG. 1 shows an exemplary configuration of the portable device with specific internal components, according to exemplary embodiments of the present invention, the portable device 100 can be implemented without any of the components or with other components.

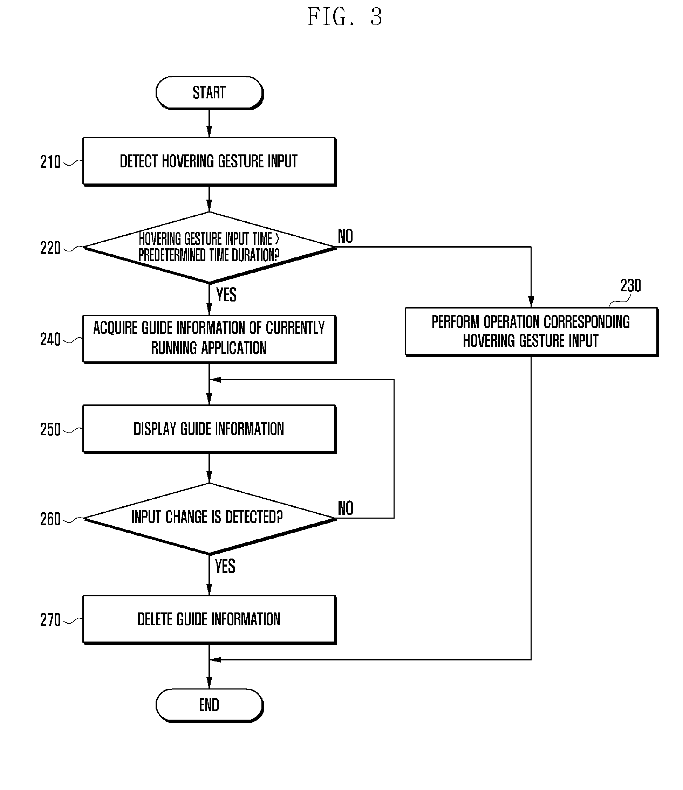

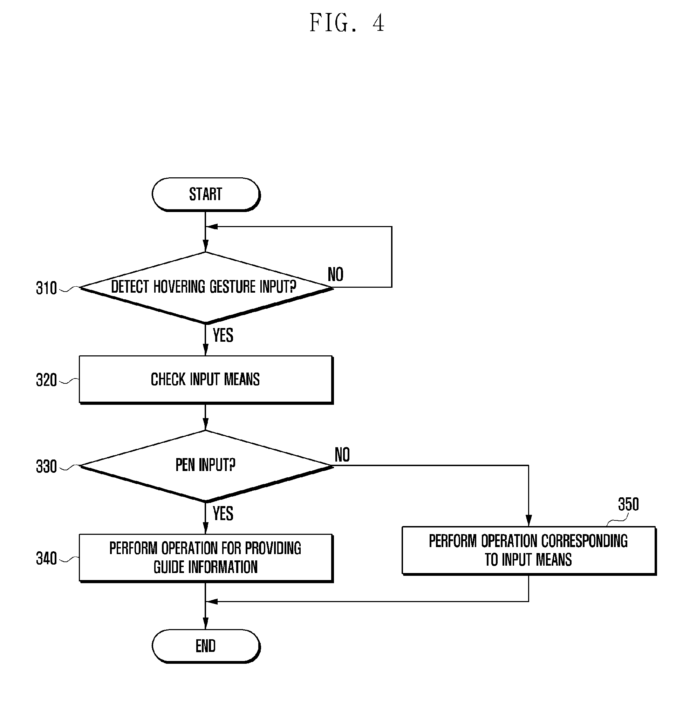

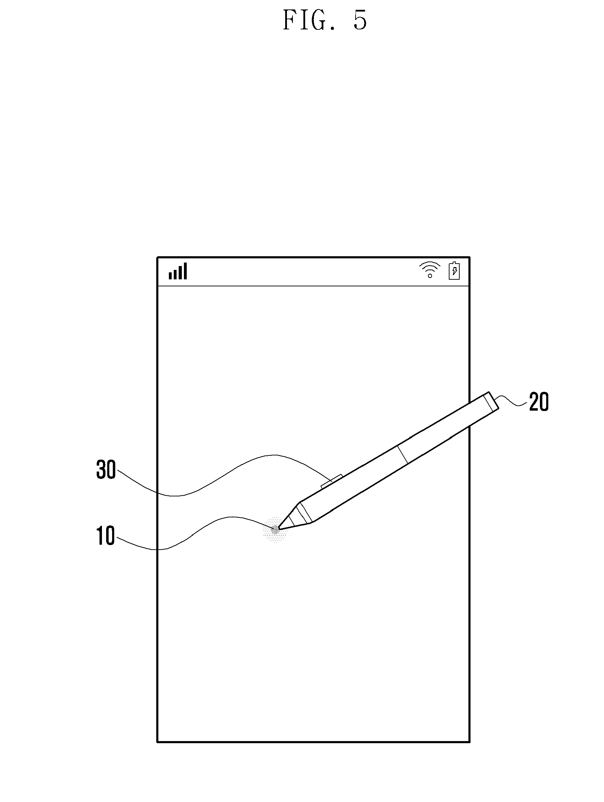

FIG. 3 is a flowchart illustrating a guide information providing method of a portable device according to an exemplary embodiment of the present invention. FIG. 4 is a flowchart illustrating a hovering input detection procedure of a guide information providing method according to an exemplary embodiment of the present invention. FIG. 5 is a diagram illustrating an example of a hovering gesture input in a guide information providing method according to an exemplary embodiment of the present invention.

Referring to FIG. 3, the control unit 120 detects a hovering gesture input at step 210. The hovering gesture input is made using an input means maintained above a certain position on the portable device a shown in FIG. 5.

The input unit 110 detects the hovering gesture input by means of the touch sensor 111 or the electromagnetic sensor 112. The touch sensor 111 is may detect the hovering gesture with a human body, and the electromagnetic sensor 112 may detect the hovering gesture that is made with a stylus pen, digitizer pen, and/or the like. If the hovering gesture made with the human body or pen is detected, the input unit 110 generates the corresponding input signal to the control unit 120. The input signal may include the hovering gesture input position, input means, and manipulation state of the button of the input means or pen.

The control unit 120 detects the hovering gesture input based on the input signal generated by the input unit 110. The control unit 120 may check (e.g., detect, analyze, etc.) the hovering gesture input occurrence, hovering gesture input position, and input means based on the input signal. In the exemplary case of FIG. 5, the control unit 120 may determine the hovering gesture input occurrence position 10, the pen 20 as the input means, and the pressed state of the button 30 of the pen.

According to exemplary embodiments of the present invention, if a hovering gesture input made with the stylus pen or the digitizer pen is detected, the control unit 120 controls to present the guide information in response to the pen-based hovering gesture input.

According to exemplary embodiments of the present invention, the control unit 120 can be configured to control to present the guide information in response to the hovering gesture input made with the pen in the state that the button of the pen is pressed. For example, when the control unit 120 determines that the button of the pen is pressed when the pen is maintained in a position so as to operatively generate a hovering gesture input, the control unit 120 may operatively present the guide information.

In detail, referring to FIG. 4, the control unit 120 detects the hovering gesture input at step 310. As shown in FIG. 5, if the hovering gesture input is made on the portable device 100, the control unit 120 receives the input signal generated by the input unit 110 and the control unit 120 recognizes the hovering gesture input based on the input signal.

Thereafter, the control unit 120 determines the input means at step 320. The input unit 110 may detect the hovering gesture input by means of plural input pads corresponding to the respective input means. For example, the input unit 110 may include plural input pads 110a and 110b formed in a layered structure as shown in FIG. 2. The plural input pads 110a and 110b may detect the gesture inputs made with different input means. For example, the first input pad 110a may detect the hovering gesture input made with the human body, and the second input pad 110b may detect the hovering gesture input made with the stylus pen or the digitizer pen. The input pads are may detect the hovering gesture input occurrence position and the manipulation state of the key, button, jog dial, and/or the like of the pen.

The input unit 110 may generate different input signals depending on the input means used for making the hovering gesture input. The input unit 110 may generate different input signals depending on the manipulation state of the key, button, jog dial, and/or the like of the pen used for making the hovering gesture input. The input unit 110 may generate the input signal including the information on the hovering gesture input to the control unit 120.

The control unit 120 may recognize the hovering gesture input and determine the input means based on the received input signal. The control unit 120 may determine the manipulation state of the button provided on the input means.

The control unit 120 determines whether the hovering gesture input corresponds to a pen-hovering gesture input at step 330. The control unit 120 analyzes the input signal to check (e.g., determine, analyze, etc.) the hovering gesture input occurrence, the hover gesture input occurrence position, and the input means. The control unit 120 may determine whether the hovering gesture input corresponds to the pen-hovering gesture input based on the analysis result. The control unit 120 may also determine whether the hovering gesture input is made in the state in which the button of the pen is pressed.

If the control unit 120 determines that the hovering gesture input corresponds to the pen-hovering gesture input or the pen-hovering gesture input in the state in which the button of the pen is pressed, the control unit 120 controls to present the guide information at step 340. The control unit 120 may execute the operation of providing the guide information in response to the pen-hovering gesture input or the pen-hovering gesture input in the state in which the button of the pen is pressed.

Otherwise, if the control unit 120 determines that the hovering gesture input does not correspond not the pen-hovering gesture input (e.g., if the hovering gesture is made with the human body or other physical tool), the control unit 120 performs an operation corresponding to the input means at step 350.

The control unit 120 may perform an operation of a function of the portable device 100 in response to the hovering gesture input made with an input means other than the pen. For example, the control unit 120 may perform an operation such as executing a specific function, placing or receiving a call, transmitting/receiving a message, inputting text, switching a page, playing multimedia, and the like.

Although the exemplary embodiments of the present invention are directed to the case in which the guide information is presented in response to the pen-hovering gesture input or the pen-hovering gesture input made in the state in which the button of the pen is pressed, exemplary embodiments of the present invention are not limited thereto. For example, exemplary embodiments of the present invention may perform the operation of presenting the guide information in response to a human body-hovering gesture input.

As described above, the control unit 120 detects the hovering gesture input at step 210. Particularly, the control unit 120 may detect the hovering gesture input made with the pen.

Thereafter, the control unit 120 determines whether the hovering gesture is maintained over a predetermined time duration at step 220.

The predetermined time duration can be set in the manufacturing stage of the portable device 100 or by the user. The control unit 120 controls to display the time setting UI or GUI in response to the user request and sets the time duration according to the user input.

As the hovering gesture is maintained, the input unit 110 generates an input signal corresponding to the hovering gesture input to the control unit 120 periodically. The control unit 120 may determine whether the input signal is generated periodically since the first generation of the input signal for the predetermined duration.

If the input signal is changed for another before the predetermined time duration expires, or if the input is not received, the control unit 120 regards that the hovering gesture is not maintained. For example, if the position of the hovering gesture input moves, the input means becomes more distant from the portable device such that the portable device fails to continue to detect the hovering gesture, the manipulation state of the button of the input means changes, and/or the like, the input unit 110 generates a new input signal to the control unit 120. If the new input signal is received before the expiration of the predetermined time duration, the control unit 120 determines that the hovering gesture is terminated.

According to exemplary embodiment of the present invention, the portable device may use a predetermined area over which the hovering gesture may be maintained and still be determined to correspond to the initial hovering gesture. For example, if the input means maintains a hovering gesture within a predefined proximity or threshold of an initial location of the hovering gesture, the control unit 120 may determine that the hovering gesture is maintained.

If the control unit 120 determines that the hovering gesture is not maintained over the predetermined time duration at step 220, the control unit 120 performs an operation corresponding to the hovering gesture input at step 230. The control unit 120 may perform the operation of one of the various functions provided by the portable device 100 in response to the hovering gesture input. For example, the control unit 120 may perform executing a specific function, placing/receiving a call, transmitting/receiving a message, inputting text, switching a page, playing multimedia, and the like.

In contrast, if the control unit 120 determines that the hovering gesture is maintained over the predetermined duration at step 220, the control unit 120 retrieves the guide information corresponding to the currently running application at step 240. The control unit 120 may execute one or more applications simultaneously. At this time, the control unit 120 can execute some of the applications on the background. The control unit 120 controls the display unit 140 such that the background-running applications are not appearing on the screen. Also, the control unit 120 is capable of executing a specific application on the foreground. The control unit 120 controls the display unit to display the foreground-running application on the screen. The control unit 120 is capable of executing two or more application on the foreground. In this case, the control unit 120 may control the display unit 140 to display the foreground-running applications in the corresponding regions formed by dividing the screen or in the form of widgets or popup windows on a single screen simultaneously.

The control unit 120 may retrieve the guide information of the application running on the foreground with the execution screen among the currently running application. For example, the control unit 120 may acquire the guide information of the application which the user has checked on the screen and made the hovering gesture onto the execution screen of the target application.

If two or more applications are running on the foreground, the control unit 120 acquires the guide information of the application corresponding to the position at which the hovering gesture input is made among the foreground-running applications.

The guide information may include the information on the user interface function for used in controlling the application. For example, the guide information may include the information on the interface for use in controlling the application function such as page navigation, list navigation, text input, text selection, and the like. The guide information may include the information on the interface for use of shortcut keys such as a double tap, a drag, other gestures, and the like. When the currently running application is a drawing application, the guide information can include the type, the boldness, and the color of the pen. The guide information may correspond to the quick menu items executable in the current application.

If necessary, the guide information can include the information on the interface provided by the portable device regardless of the application. For example, interface for switching among an idle screen, a lock screen, and a home screen of the portable device, an interface for presenting the list of the applications running on the background, and an interface for quick execution of search service.

The guide information can include the information provided by the application developer or provider or the guider information developer or provider so as to be presented in the portable terminal along with or in separation from the application.

The control unit 120 may retrieve the guide information corresponding to the application from the storage unit 130. The storage unit 130 may store the guide information in the application execution folder or in association with the application. The control unit 120 searches for the guide information corresponding to the application and, if the guide information is found, retrieves the guide information. If the control unit 120 does not find corresponding guide information, the control unit 120 ends the guide providing procedure and controls the display unit 140 to display the information in the absence of the guide information with a text message, an image, an icon, or the like.

The control unit 120 may acquire the guide information corresponding to the application from a server. The portable device 100 may include a communication unit for data communication with the external device (e.g., server). The control unit 120 may control the communication unit to transmit a guide information request message to the server. If the control unit 120 receives a response message notifying of the absence of the guide information or if the control unit 120 is unable to receive the guide information, the control unit 120 terminates the guide providing procedure or controls the display unit 140 to display an alarm message notifying of the absence of the guide information in the form of a text, an image, an icon, or the like. The control unit 120 may control the storage unit 130 to store the guide information received from the server temporarily or persistently.

The guide information may include the information on the application and at least one of the text, the image, the icon, and the like for use in providing the guide information. The guide information may also include the information on a position, a visual effect, and an arrangement, and the like to be applied for presenting the guide information.

According to exemplary embodiments of the present invention, the control unit 120 may acquire the guide information in response to the hovering gesture input and may display the guide information corresponding to the current running application.

According to exemplary embodiments of the present invention, the control unit 120 may check (e.g., determine, etc.) the currently running application in response to the hovering gesture input and acquiring the guide information to be displayed in association with the application. The order of steps of checking the currently running application and acquiring the guide information to be presented can be changed freely without departing from the scope of the present invention.

Thereafter, the control unit 120 displays the guide information at step 250.

The control unit 120 controls the display unit 140 to display the guide information. The control unit 120 may determine the hovering gesture input occurrence position and may present the guide information at the hovering gesture input occurrence position in the form of a text, an image, an icon, and/or the like. The control unit 120 may display the guide information so as to be overlaid on the execution screen of the application. At this time, the control unit 120 may display the execution screen of the application below the overlaid guide information with the semitransparent effect. The control unit 120 may display the guide information with at least one of a semitransparent effect, a popup window effect, an animation effect, a slide effect, and the like. The control unit 120 may display (present) a presentation of the guide information in the form of any of a radiation type window, a sector type window, a linear type window, an oval type window, and the like with a text, an image, an icon, or the like at the position at which the hovering gesture input is detected. According to exemplary embodiments of the present invention, the control unit 120 may display the guide information at a predefined position.

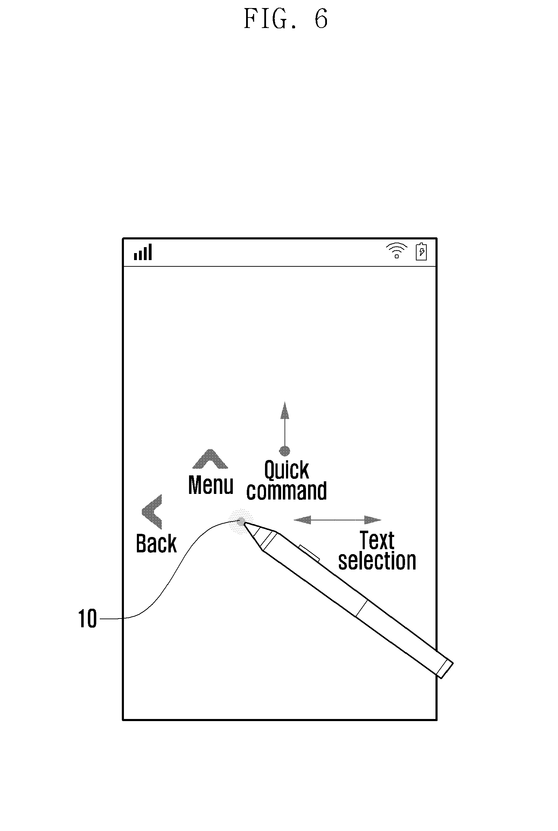

FIG. 6 is a diagram illustrating an example of guide information presentation in a guide information providing method according to an exemplary embodiment of the present invention.

Referring to FIG. 6, the control unit 120 may determine the hovering gesture input occurrence position 10. The control unit 120 may control the display unit to display the guide information in the form of at least one of a radiated text, an image, an icon, and the like. At this time, the control unit 120 may control the display unit 140 to display the guide information with an animation effect in which the information items are radiated from the hovering gesture input occurrence position.

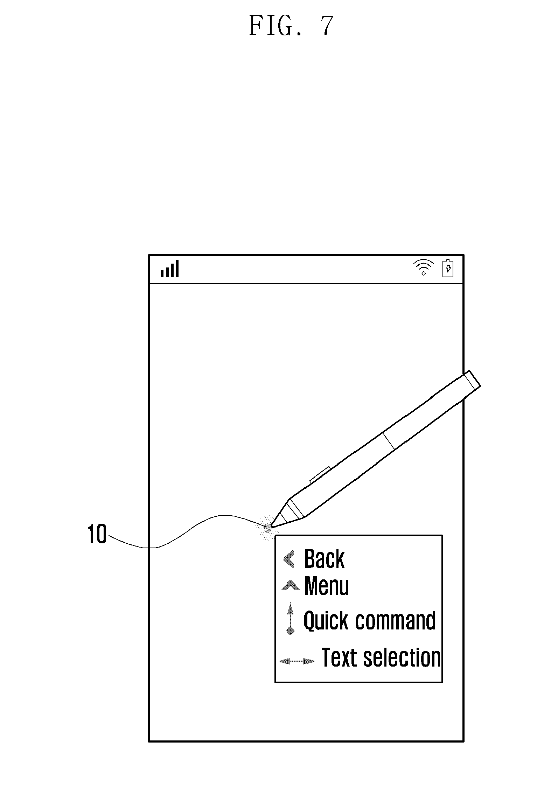

FIG. 7 is a diagram illustrating an example of guide information presentation in a guide information providing method according to an exemplary embodiment of the present invention.

Referring to FIG. 7, the control unit 120 may determine the hovering gesture input occurrence position 10. The control unit 120 may control the display unit 140 to display a popup window including at least one of a text, an image, an icon, and the like corresponding to the guide information around the hovering gesture input occurrence position 10. At this time, the control unit 120 may control the display unit such that the popup window is displayed with a sliding effect, a semitransparent effect, or the like without hiding the application execution screen.

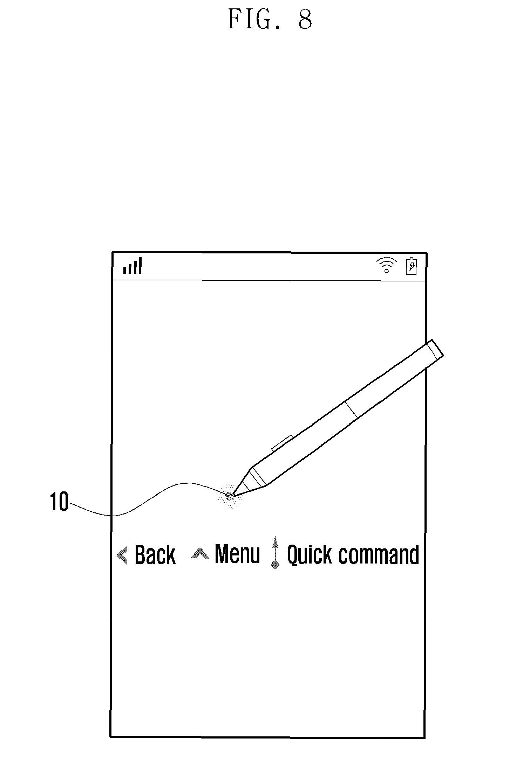

FIG. 8 is a diagram illustrating an example of guide information presentation in a guide information providing method according to an exemplary embodiment of the present invention.

Referring to FIG. 8, the control unit 120 may determine the hovering gesture input occurrence position 10. The control unit 120 may control the display unit 140 to display the guide information linearly with at least one of a text, an image, an icon, and the like.

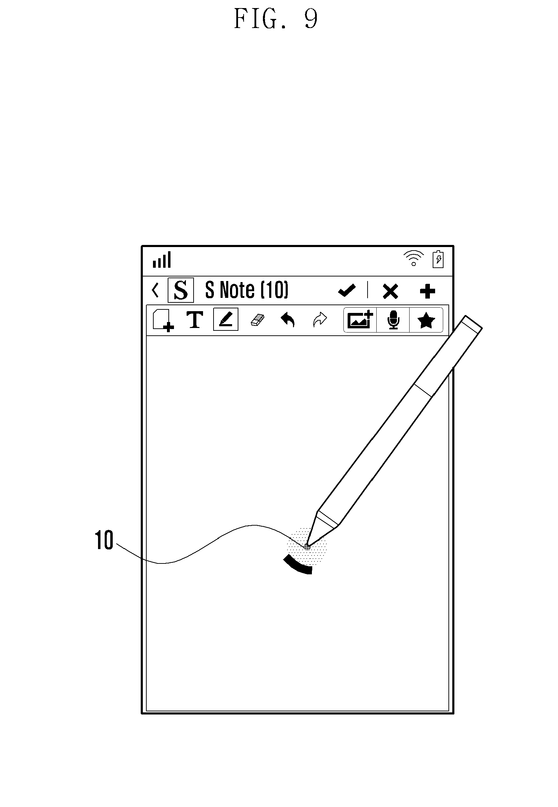

FIG. 9 is a diagram illustrating an example of presenting guide information corresponding to a drawing application in a guide information providing method according to an exemplary embodiment of the present invention.

Referring to FIG. 9, if the currently running application is a drawing application, the guide information may include the pen information having at least one of a type, a boldness, and a color of the pen. The control unit 120 acquires the guide information including the pen information corresponding to the currently running application and displays the guide information in a radiated manner around the hovering gesture input occurrence position 10.

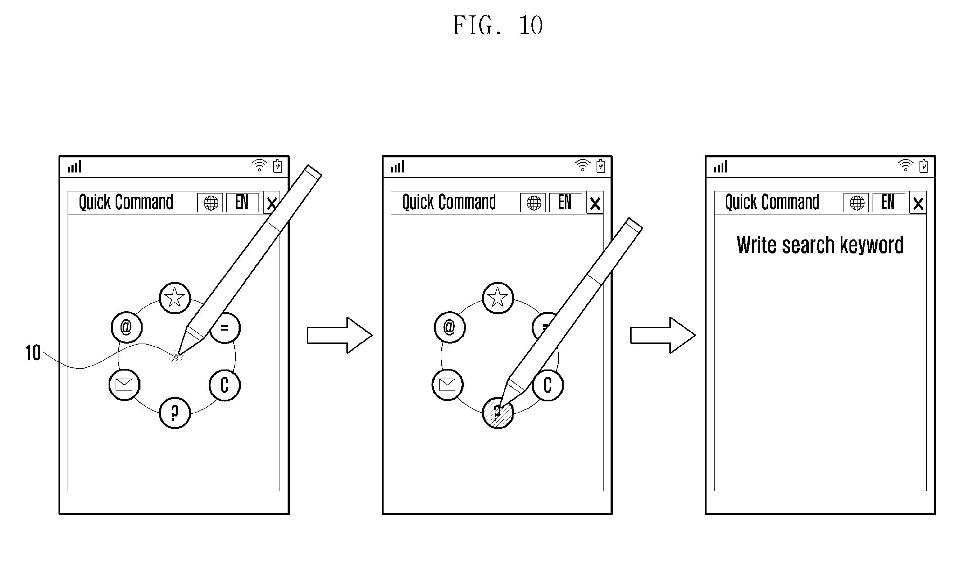

FIG. 10 is a diagram illustrating an example of presenting guide information of a quick menu in a guide information providing method according to an exemplary embodiment of the present invention.

Referring to FIG. 10, the guide information may correspond to the quick menu items. The quick menu items represent the functions of the currently running application or the portable device 100 such as favorites, mail transmission, text message transmission, calculation, search functions, and the like. The control unit 120 may present the quick menu items as the guide information in the radiated manner around the hovering gesture input occurrence position 10.

In this state, if a user input for selecting one of the quick menu items is detected, the control unit 120 executes the function represented by the selected quick menu item. In the example illustrated in FIG. 10, if the user selects the quick menu item of search function, the control unit 120 controls the display unit 140 to display a text window to receive a search word.

In the state where the guide information is presented, if the hovering gesture input occurrence position changes, the control unit 120 controls the display unit 140 to display the guide information around the new hovering gesture input occurrence position. If the hovering gesture input occurrence position changes, the input unit 110 detects the change and generates the input signal including the information on the new position to the control unit 120. The control unit 120 checks the hovering gesture input occurrence position based on the received input signal and controls the display unit 140 to display the guide information around the new position.

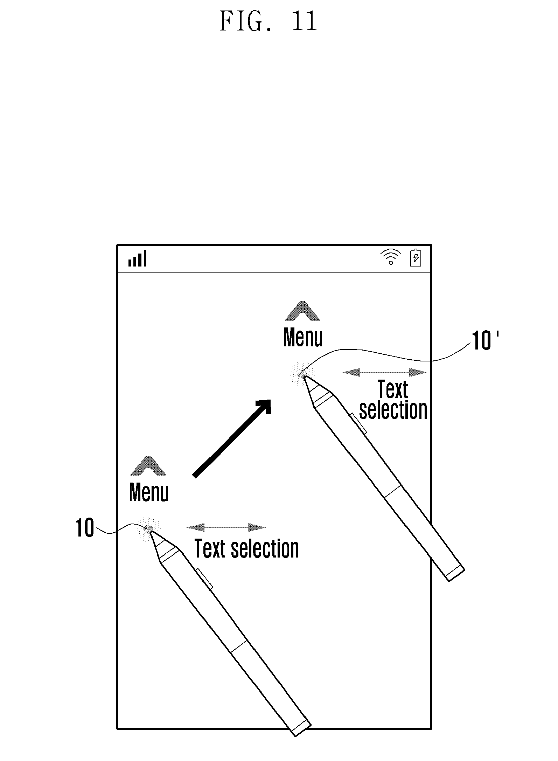

FIG. 11 is a diagram illustrating an example of presenting guide information in accordance with a change of a hovering gesture input position in a guide information providing method according to an exemplary embodiment of the present invention.

Referring to FIG. 11, the control unit 120 may display the guide information around the hovering gesture input occurrence position 10. If the hovering gesture input occurrence position changes in the state of (e.g., while) displaying the guide information, the control unit 120 checks (e.g., determines) the new hovering gesture input occurrence position 10'. The control unit 120 may control the display unit 140 to display the guide information around the new hovering gesture input occurrence position 10'. The control unit 120 monitors change of the hovering gesture input position and displays the guidance information around the hovering gesture input position in real time so as to give an effect as if the guide information follows the hovering gesture input position around.

The control unit 120 may determine whether the hovering gesture input changes at step 260.

As the detected hovering gesture input is maintained, the input unit 110 generates the input signal corresponding to the hovering gesture input to the control unit 120 periodically.

If the hovering gesture input changes, the input unit 110 generates an input signal corresponding to the changed hovering gesture input to the control unit 120. For example, if the hovering gesture input occurrence position moves, if the input means becomes more distant from the portable device to fail detecting the hovering gesture, or the manipulation state of the button of the input means changes, the input unit 110 generates a new input signal to the control unit 120. If a new type of input such as touch input, proximity input, and pressure input other than the hovering gesture input is detected, the input unit 110 generates an input signal corresponding to the input gesture to the control unit 120.

If the new input signal is received from the input unit 110, the control unit 120 determines that the hovering gesture input has changed.

If the hovering gesture input change is detected, the control unit 120 hides the guide information at step 270.

The control unit 120 may control the display unit 140 to no longer display the guide information according to the hovering gesture input change. The control unit 120 may perform a function corresponding to the new input signal and/or may control the display unit 140 to display the UI or GUI corresponding to the function.

The control unit 120 may perform the operation corresponding to the new input signal. For example, if the hovering gesture input is terminated and the touch input is detected, the control unit 120 may perform the operation corresponding to the touch input. Referring to the example illustrated in FIG. 10, if the guide information corresponds to the quick menu and if the hovering gesture input is terminated and the touch input made onto one of the quick menu items, the control unit 120 performs the operation corresponding to the quick menu item on which the touch input is detected. For example, if the touch input is made onto the quick menu item corresponding to the search function, the control unit 120 controls the display unit 140 to display a search window.

Although the description is directed to the exemplary operation of the control unit 120 in response to the touch input onto the quick menu, exemplary embodiments of the present invention are not limited thereto. For example, the control unit 120 may perform one of various operations in response to the new input signal generated in association with the displayed guide information or the currently running application.

As described above, the portable terminal and guide information providing method thereof according to exemplary embodiments of the present invention may detect a hovering gesture input and may present the guide information selectively according to the user's necessity and intention.

It will be appreciated that exemplary embodiments of the present invention according to the claims and description in the specification can be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present invention.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are exemplary embodiments of machine-readable storage that are suitable for storing a program or programs comprising instructions that, when executed, implement exemplary embodiments of the present invention. Accordingly, exemplary embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and exemplary embodiments suitably encompass the same.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A guide providing method of a portable device, the method comprising:
detecting a hovering gesture input;
acquiring guide information corresponding to a currently running application; and
displaying the guide information in response to the hovering gesture input.

2. The method of claim 1, wherein the hovering gesture input is made with a pen, and
wherein the pen corresponds to at least one of a stylus pen and a digitizer pen.

3. The method of claim 1, wherein the acquiring of the guide information comprises:
determining whether the hovering gesture input is maintained over a predetermined time duration; and
determining, when the hovering gesture input is maintained over the predetermined time duration, the currently running application.

4. The method of claim 1, wherein the currently running application corresponds to an application running on a foreground of an execution screen.

5. The method of claim 1, wherein the displaying of the guide information comprises:
presenting, when the hovering gesture input is maintained over a predetermined time duration, the guide information.

6. The method of claim 1, wherein the displaying of the guide information comprises:
determining a position at which the hovering gesture input is detected; and
displaying the guide information on the determined position.

7. The method of claim 6, wherein the displaying of the guide information comprises:
determining, when movement of the hovering gesture is detected, a moved position of the hovering gesture; and
displaying the guide information on the moved position.

8. The method of claim 1, wherein the displaying of the guide information comprises:
presenting the guide information over an execution screen of the currently running application.

9. The method of claim 1, wherein the displaying of the guide information comprises:
presenting the guide information with at least one of a transparent effect, a popup effect, an animation effect, and a slide effect.

10. The method of claim 1, wherein the displaying of the guide information comprises:
presenting the guide information in at least one of a radiation format, a sector format, a linear format, and an oval format with at least one of a text, an image, and an icon based on the hovering gesture input position.

11. The method of claim 1, wherein the guide information comprises at least one of function information corresponding to current user information, pen information including at least one of a type, a boldness, and a color of a pen, and a quick menu including at least one menu item.

12. A portable device comprising:
an input unit which detects a hovering gesture input and generates an input signal corresponding to the hovering gesture input;
a display unit which displays information; and
a control unit which controls acquiring guide information corresponding to a currently running application in response to the hovering gesture input from the input unit and controls the display unit to display the guide information in response to a hovering gesture input.

13. The portable device of claim 12, wherein the hovering gesture input is made with a pen, and
wherein, the pen corresponds to at least one of a stylus pen and a digitizer pen.

14. The portable device of claim 12, wherein the control unit determines whether the hovering gesture input is maintained over a predetermined time duration and determines, when the hovering gesture input is maintained over the predetermined time duration, the currently running application.

15. The portable device of claim 12, wherein the control unit determines an application which is running on a foreground of an execution screen on the display unit among the current running applications and acquiring the guide information corresponding to the application of which execution screen is displayed.
